# EUROPÄISCHE PATENTSCHRIFT

(11) **EP 0 792 216 B1**
(45) Veröffentlichungstag und Bekanntmachung des Hinweises auf die Patenterteilung: **30.06.1999**
(21) Anmeldenummer: 96927057.8
(22) Anmeldetag: 27.07.1996
(51) Int. Cl.: B60J 10/00

(54) **KRAFTFAHRZEUG-DICHTUNGSPROFIL**
PROFILED MOTOR VEHICLE SEAL
JOINT D'ETANCHEITE PROFILE POUR VEHICULE A MOTEUR

(30) Priorität: 24.08.1995 DE 19531167
(43) Veröffentlichungstag der Anmeldung: 03.09.1997
(73) Patentinhaber: METEOR GUMMIWERKE K.H. BÄDJE GMBH & CO., 31167 Bockenem (DE)
(72) Erfinder: BAESECKE, Karl, D-31162 Bad Salzdetfurth (DE)
(74) Vertreter: Kosel, Peter
(86) Internationale Anmeldenummer: EP9603323
(87) Internationale Veröffentlichungsnummer: WO9708003

(56) Entgegenhaltungen:
- DE-A- 3 147 801
- DE-A- 4 011 548
- GB-A- 2 024 297
- GB-A- 2 146 959
- US-A- 2 928 201

## Beschreibung

Die Erfindung betrifft ein Dichtungsprofil nach dem Oberbegriff des Anspruchs 1.

Bei einem bekannten Dichtungsprofil dieser Art (DE 28 42 207 A1) kann alternativ (Seite 5, Abs. 2) auf der Steginnenseite ein klebend haftendes Element aus nichtvulkanisiertem Gummi, z.B. Butylgummi (Seite 3, Abs. 3), vorgesehen sein. Dieser Gummi läßt sich bei der Montage des Dichtungsprofils auf den Flansch verhältnismäßig schwer komprimieren, so daß sich unerwünscht hohe Aufsteckkräfte ergeben. Da das Element nichtvulkanisiert sein soll, kann es erst nach der Vulkanisation das Dichtungsprofils in einem aufwendigen, zusätzlichen Arbeitsgang auf die Steginnenfläche geklebt werden. Dies muß außerdem geschehen, bevor die Schenkel des U-förmigen Halteteils des Dichtungsprofils in ihre Montageposition gebogen werden. Das bekannte Element kann daher in keinem Fell eingesetzt werden, in dem der Halteteil seine U-förmige Montageform schon vor dem oder im Spritzkopf des Extruders erhält.

Eine ähnliche Lösung ist aus der DE 32 27 885 A1, Fig. 3, bekannt. Hier wird eine Kammer des in der üblichen Weise zuvor vulkanisierten Halteteils mit einem offenbar pastösen Butyl-Kautschukteil ausgekleidet. Die Druckschrift schildert die Nachteile dieser Bauweise in dem die Seiten 6 und 7 überbrückenden Absatz. Die bekannte Randverkleidung kann nach einer Justage nicht weiterverwendet werden, weil die Kammer durch die Paste verschmiert ist.

Aus der DE 31 47 801 A1 ist eine Profilleiste zum dichtenden Einfassen von Fenstern an sich bekannt. Die Aufnahmenut für das Fenster ist in einem EPDM-Profil ausgebildet. Weil sich EPDM sehr schlecht kleben laßt, hat man in die Aufnahmenut eine sehr dünne Oberflächenschicht aus einer klebefreudigen Kautschukmischung aufvulkanisiert, die polar, aber nicht selbst klebend ist. Zum Einbau wird vielmehr auf die Oberflächenschicht zusätzlich ein polarer Kleber aufgetragen, der andererseits an dem Fenster haftet.

Aus der DE 41 21 552 A1 ist es an sich bekannt, die Sichtfläche des Halteteils mit einem Stoffstreifen zu kaschieren. Dazu wird auf die Sichtfläche eine erste Klebstoffschicht koextrudiert. Der Stoffstreifen ist mit einer zweiten Klebstoffschicht aus thermoplastischem Harz überzogen. Zur Kaschierung werden die beiden Klebstoffschichten unter Druck- und Wärmeeinwirkung miteinander verbunden.

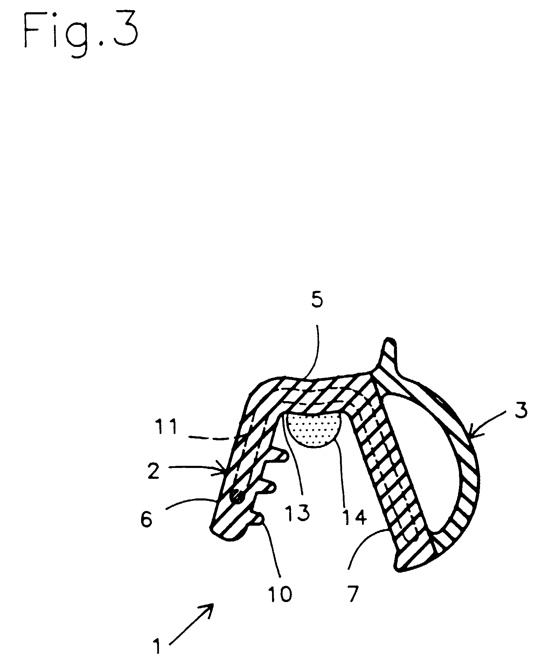

Aus der DE 33 46 070 A1 ist es an sich bekannt, mindestens einen Schenkel des U-förmigen Klemmbereichs des Dichtungsprofils mit einer schwenkbaren Verlängerung aus elastomerem Material zu versehen. Die dem Flansch zugewandte Innenfläche ist mit einer Klebstoffschicht belegt. Die Verlängerung wird bei der Montage nach innen geschwenkt, so daß die Klebstoffschicht eine feste und dichte Verbindung zwischen dem Flansch und dem Klemmbereich herstellt. Bei der Ausführungsform nach Fig. 3 wird nur ein verhältnismäßig niedriger Klemmbereich mit Klebstoffverlängerungen an beiden Schenkeln verwendet. Hier kann zur Fixierung und Zentrierung bei der Montage auch auf die Innenfläche des Steges eine Klebstoffschicht aufgetragen werden (Seite 8, Zeile 26 und 27, und Seite 9, Zeile 6 bis 9). All diese Klebstoffschichten können wiederum erst noch der Vulkanisation des Dichtungsprofils auf den Klemmbereich aufgetragen werden. Dies hat die zuvor erläuterten Nachteile zur Folge.

Aus der DE 29 24 574 C2 ist es an sich bekannt, nach der Vulkanisation und vor dem Zusammenbiegen des U-förmigen Halteteils auf dessen Innenfläche eine dünne Schicht aus auf Wärme ansprechendem Material in einem zusätzlichen Arbeitsgang aufzutragen. Die Schicht besteht z.B. aus Polyamid oder Ethylen-Vinyl-Acetat und erstreckt sich von einer Haltelippe an dem einen Schenkel über den Steg bis zu einer Haltelippe an dem anderen Schenkel. Die Haltelippen sollen ein Herausfließen der Materialschicht während der Lagerung oder Lieferung zum Verbraucher verhindern (Spalte 2, Zeile 39 bis 44). Der Verbraucher drückt den Halteteil auf einen (Karosserie-) Flansch und führt dann dem Halteteil Wärme von außen zu, bis das Material bei 70 bis 120° C schaumförmig wird und sich ausdehnt und den gesamten Raum zwischen dem Halteteil und dem Flansch ausfüllt.

Man hat euch schon versucht, das Kriechen von Wasser zwischen dem Halteteil und dem Flansch hindurch in das Innere des Kraftfahrzeugs dadurch zu verhindern, daß man auf die Steginnenfläche eine dauerplastische Masse auftrug. Dies konnte wiederum erst nach der Vulkanisation des Dichtungsprofils geschehen. Die dauerplastische Masse quoll aus den Trennflächen der abgelängten Profilabschnitte heraus und verschmutzte die Umgebung einschließlich benachbarter Profilabschnitte. Dadurch wurden aufwendige Reinigungsaktionen erforderlich. Es ist auch zum Austrocknen und Schrumpfen solcher dauerplastischer Massen gekommen, mit entsprechendem Verlust an Dichtigkeit.

Grundsätzlich ist überall dort, wo am Kraftfahrzeug an eingebauten Dichtungsprofilen ein Druckgefälle besteht, mit der Gefahr zu rechnen, daß Wasser durch den Halteteil des Dichtungsprofils kriecht.

Der Erfindung liegt die Aufgabe zugrunde, für alle gattungsgemäßen Dichtungsprofile eine dauerhafte Abdichtung gegenüber Kriechwasser im Halteteil mit verhältnismäßig geringem Aufwand zu ermöglichen.

Dies Aufgabe ist durch die Merkmale des Anspruchs 1 gelöst. Der Halteteil besteht vorzugsweise aus elastomerem Material, insbesondere Weichgummi. Der Halteteil kann mit oder ohne eingebettete Armierung, z.B. Wendeldraht oder metallisches Stanzband, ausgeführt sein. Gegebenenfalls können eine oder mehrere Haltelippen innen an einen oder beide Schenkel des Halteteils angeformt sein. Die erfindungsgemäße Dichtungsmasse kann in jeden beliebigen Dichtungsteil auf eine Weise eingebracht werden, die in den meisten Fällen einen zusätzlichen Arbeitsgang vermeidet. Vorzugsweise wird die Dichtungsmasse auf dem Wege der Koextrusion zusammen mit der Herstellung des Dichtungsprofils eingebracht und auch zusammen mit dem Dichtungsprofil vulkanisiert. Der so vulkanisierte Dichtungsstrang ist dauerhaft mit dem Steg verbunden, kann also während Lagerung und Transport nicht aus dem Halteteil herausfallen oder herausquellen. So hat man bis zur weiteren Konfektionierung der abgetrennten Abschnitte des Dichtungsprofils stets saubere Trennflächen, die sich ohne Reinigungs- oder andere Vorbereitungsmaßnahmen sofort weiter verarbeiten lassen. Bei der Koextrusion der Dichtungsmasse mit dem Halteteil und dem wenigstens einen Dichtungsteil können die Schenkel des Halteteils auch schon vor oder in dem Spritzkopf in ihren Endzustand geformt werden. Man kann sich dann eine Verformung des Halteteils nach der Vulkanisationsstrecke ersparen. Wenn dagegen die Dichtungsmasse gleich anschließend an den Spritzkopf auf den Steg aufgebracht wird, kann dies z.B. durch eine Düse in den noch nicht oder noch nicht ganz geschlossenen Halteteil erfolgen. Vorteilhaft ist, daß die Umwandlung der Dichtungsmasse in den Dichtungsstrang gleichzeitig mit der Vulkanisation des Dichtungsprofils geschieht, also ohne zusätzlichen verfahrenstechnischen Aufwand.

Die Abtrennung gemäß Anspruch 2 erfolgt vorzugsweise nach der Kühlung des Dichtungsprofils und gegebenenfalls nach dem Biegen der Schenkel in ihren Endzustand. Die Verbindung der Trennflächen des Abschnitts kann in der Gummifabrik geschehen, so daß dem Kraftfahrzeughersteller die so gewonnenen Dichtungsprofilringe fertig ans Montageband geliefert werden können. So ist gewährleistet, daß auch im Bereich des Dichtungsstrangs keine Lücke für das Hindurchtreten von Kriechwasser verbleibt.

Gemäß Anspruch 3 kann zu einer einwandfreien Verbindung auch Vulkanisationspaste oder ein Kaltkleber verwendet werden.

Durch die Merkmale des Anspruchs 4 bietet der Dichtungsstrang im eingebauten Zustand des Dichtungsprofils eine sehr gute und beständige Sicherung gegen Kriechwasser.

Die Ansprüche 5 bis 11 kennzeichnen jeweils vorteilhafte Elastomermischungen für die Dichtungsmasse. Als Treibmittel zum Aufschäumen kann Azodicarbonamid und/oder Sulfohydrazid und als Vernetzungshilfsmittel Zinkoxid verwendet werden.

Diese und weitere Merkmale und Vorteile der Erfindung werden nachfolgend anhand der in den Zeichnungen dargestellten Ausführungsbespiele näher erläutert. Es zeigt:
Fig. 1 einen Querschnitt durch eine erste Ausführungsform eines Dichtungsprofils,
Fig. 2 einen Teil des Querschnitts gemaß Fig. 1 in montiertem Zustand,
Fig. 3 einen Querschnitt durch eine andere Ausführungsform des Dichtungsprofils,
Fig. 4 einen Querschnitt durch eine weitere Ausführungsform des Dichtungsprofils und
Fig. 5 ein Blockdiagramm mit unterschiedlichen Verfahrensabläufen für die Herstellung des Dichtungsprofils.

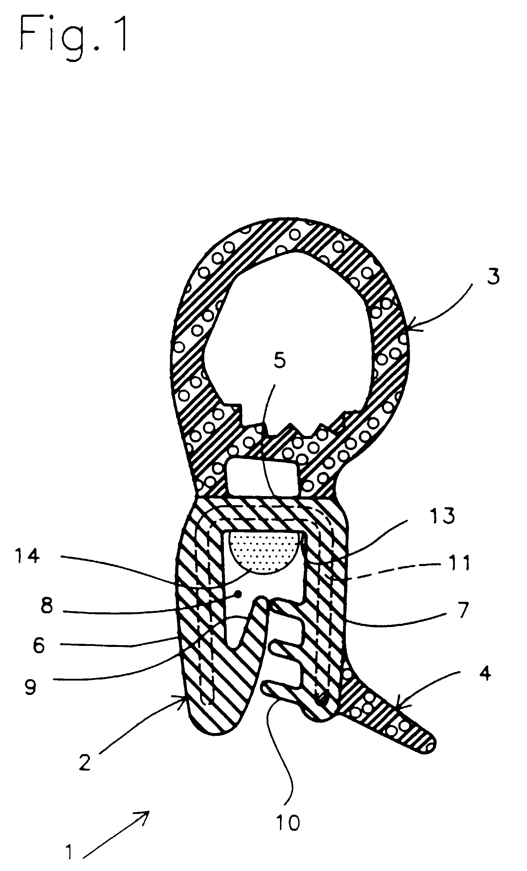

Fig. 1 zeigt ein Dichtungsprofil 1 mit einem Halteteil 2 und an den Halteteil 2 durch Koextrusion angeformten Dichtungsteilen 3 und 4.

Der Halteteil 2 besteht vorzugsweise aus Weichgummi und weist einen im wesentlichen U-förmigen Querschnitt auf, mit einem Steg 5 und daran angeformten Schenkeln 6 und 7. Von jedem Schenkel 6, 7 erstreckt sich in einen Kanal 8 des Halteteils 2 wenigstens eine Haltelippe 9 und 10. In den Halteteil 2 ist ferner eine Armierung 11 eingebettet. Die Armierung 11 besteht im Fall der Fig. 1 aus Wendeldraht, kann aber auch aus einem metallischen Stanzband oder anderen Werkstoffen bestehen, die dem Halteteil 2 die im Betrieb erforderliche Festigkeit und Formstabilität verleihen.

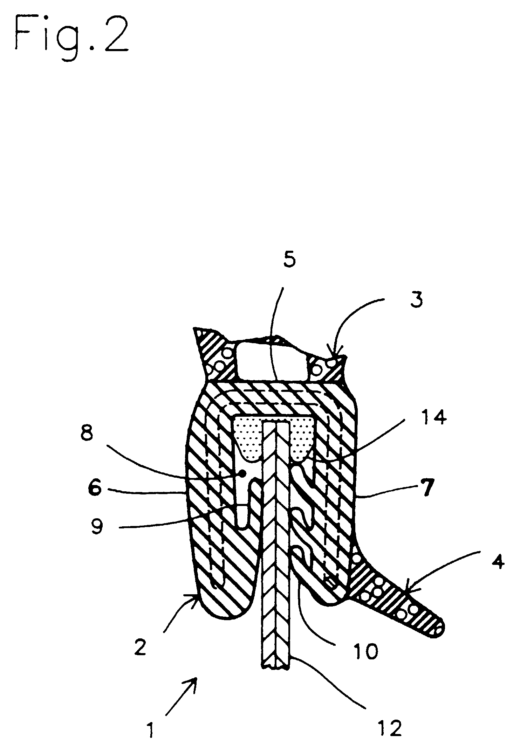

Der Halteteil 2 ist dafür vorgesehen und ausgestattet, auf einen um eine abzudichtende Öffnung eines Kraftfahrzeugs umlaufenden Flansch 12 (Fig. 2) aufgesteckt zu werden und dort sicheren Halt zu finden.

Die Dichtungsteile 3, 4 sind an dem Halteteil 2 dicht befestigt und sollen gegenüber einem relativ zu der Öffnung bewegbaren Verschließelement des Kraftfahrzeugs zuverlässig abdichten. Zu diesem Zweck sind die Dichtungsteile 3, 4 aus Moosgummi gefertigt, das sich auf dem Wege der Koextrusion mit dem Weichgummi des Halteteils 2 ausgezeichnet und dauerhaft mit dem Halteteil 2 verbinden läßt.

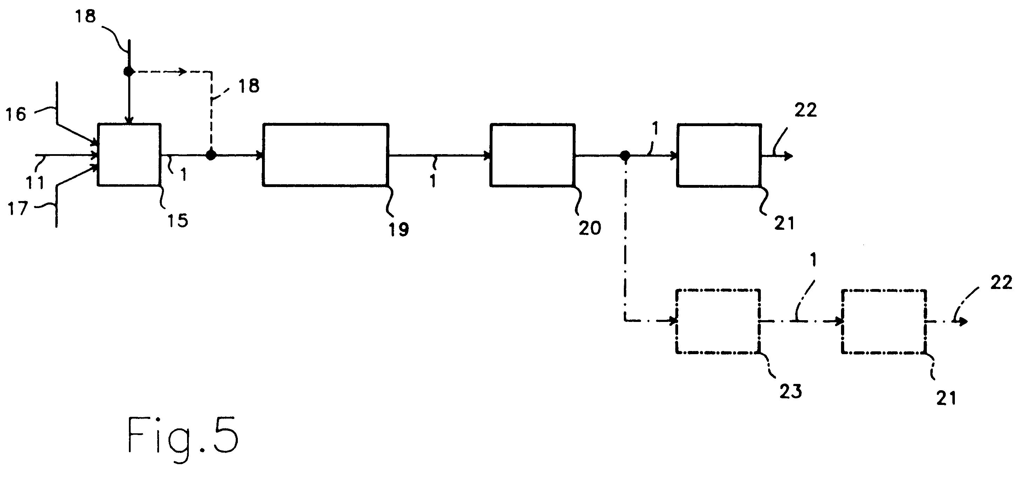

Eine innere Fläche 13 des Stegs 5 trägt klebend haftend einen Dichtungsstrang 14. Der Dichtungsstrang 14 ist, wie nachfolgend im Zusammenhang mit Fig. 5 näher erläutert werden wird, aus einer Elastomermischung durch Vulkanisation entstanden und ist dauerhaft elastisch, offenzellig geschäumt und nach außen und innen hin dauerhaft klebrig. So haftet der Dichtungsstrang 14 aufgrund seines eigenen Klebevermögens an der inneren Fläche 13. Da der Dichtungsstrang 14 außerdem formstabil ist, verändert er seine Lage relativ zu dem Halteteil 2 auch dann nicht, wenn von dem gefertigten Dichtungsprofil 1 Abschnitte abgelängt und, ggf. nach Weiterverarbeitung, letztlich an dem Kraftfahrzeug montiert werden. Man hat also stets saubere Trennflächen an dem Dichtungsprofil, die eine leichte und paßgenaue Konfektionierung des Dichtungsprofils gestatten.

Die so durch Ablängung der Abschnitte entstandenen Trennflächen lassen sich auf unterschiedliche, an sich bekannte Weise dauerhaft und dicht miteinander verbinden. Dies gilt auch für die Trennflächen des Dichtungsstrangs 14. Diese Verbindung der Trennflächen kann z.B. durch Vulkanisationskleber, Vulkanisationspaste oder Kaltkleber erfolgen, wenn aus den Abschnitten des Dichtungsprofils 1 geschlossene Ringe hergestellt werden sollen, bevor der Abschnitt des Dichtungsprofils 1 am Kraftfahrzeug montiert wird.

Fig. 2 zeigt das Dichtungsprofil 1, wie es auf dem Flansch 12 montiert ist. Dazu wird der Halteteil 2 mit der offenen Seite seines Querschnitts über den Flansch 12 gedrückt, bis die Stirnfläche des Flansches 12 den Dichtungsstrang 14 in der in Fig. 2 gezeigten Weise komprimiert hat. In dieser Endstellung der Montage sind die zunächst offenen Zellen durch Kompression geschlossen. Die klebrigen Zellwände haften aneinander. Außerdem haften der mit dem Dichtungsstrang 14 in Berührung stehende Seitenteil des Flansches 12 und die Schenkel 6,7 an dem auch außen klebrigen Dichtungsstrang 14.

Während des Aufdrückens des Halteteils 2 auf den Flansch 12 haben sich die Haltelippen 9, 10 deformiert und unter Vorspannung an die gegenüberliegenden Seitenflächen des Flansches 12 angelegt. Die Haltelippen 9, 10 bauen auf diese Weise Haftreibungskräfte auf, die ein Abziehen des Dichtungsprofils 1 von dem Flansch 12 erschweren. Außerdem verhindern die so unter Vorspannung an dem Flansch 12 anliegenden Haltelippen 10 das unerwünschte Durchdringen von Kriechwasser in den Kanal 8.

Sollte Kriechwasser dennoch an den Haltelippen 10 vorbei in den Kanal 8 gelangen, verhindert die perfekte Abdichtung durch den Dichtungsstrang 14, daß solches Kriechwasser zwischen dem Steg 5 und dem Flansch 12 hindurchkriechen und in das Innere des Kraftfahrzeugs gelangen kann.

Das Dichtungsprofil 1 gemäß den Figuren 1 und 2 eignet sich besonders als Heckdeckeldichtung oder Hecktürdichtung für Kraftfahrzeuge.

In allen Zeichnungsfiguren sind gleiche Teile mit gleichen Bezugszahlen versehen.

Fig. 3 zeigt ein Dichtungsprofil 1, das als Abdichtung für ein Schiebedach Verwendung findet. Hier ist der Halteteil 2 aus Weichgummi mit einer Harte von z.B. 65 Shore A und der Dichtungsteil 3 aus Weichgummi mit einer Harte von 45 Shore A koextrudiert.

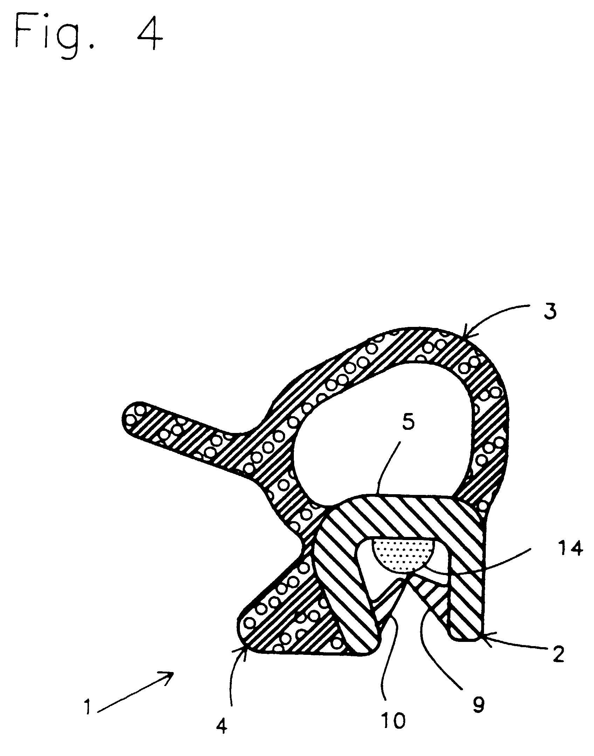

Das Dichtungsprofil 1 gemäß Fig. 4 kann für die Abdichtung eines Heckdeckels oder einer Hecktür eines Kraftfahrzeugs Verwendung finden.

Der Halteteil 2 ist hier ohne Armierung aus Hartgummi einer Härte von 90 Shore A gefertigt. Zusammen mit dem Halteteil 2 sind die Haltelippen 9, 10 aus Weichgummi einer Härte von 65 Shore A und die Dichtungsteile 3, 4 aus Moosgummi einer Härte von 20 Shore A koextrudiert. Bei diesen Werkstoffangaben handelt es sich selbstverständlich um Beispiele, die je nach dem geplanten Einsatzfall anders gewählt werden können. Jedenfalls kann erreicht werden, daß auch ohne in den Halteteil 2 eingelagerte Armierung der Halteteil 2 ausreichend fest auf dem zugehörigen Karosserieflansch sitzt, der in Fig. 4 zu Vereinfachung nicht dargestellt ist.

In dem Blockdiagramm gemäß Fig. 5 werden, zur Herstellung eines Dichtungsprofils 1 gemäß den vorangegangenen Figuren, einem Spritzkopf 15 die Armierung 11, ein elastomeres Material 16 für den Halteteil 2, ein elastomeres Material 17 für den Dichtungsteil 3 und gegebenenfalls 4 und eine Elastomermischung 18 für den Dichtungsstrang 14 zugeführt. All diese Materialien werden aus dem Spritzkopf 15 koextrudiert zu dem Dichtungsprofil 1, das anschließend eine Vulkanisationsstrecke 19 und eine Kühleinrichtung 20 durchläuft, bevor es in einer Ablängstation 21 in Abschnitte 22 abgelängt wird.

Dieses Herstellungsverfahren eignet sich besonders für Dichtungsprofile 1, deren Halteteil 2 schon im Spritzkopf 15 seine montagefertige Formgestaltung erhält, wie dies z.B. bei Fig. 4 der Fall ist.

Wenn dagegen der Halteteil 2 im Spritzkopf 15 noch nicht oder noch nicht voll geschlossen wird, kann die Elastomermischung 18, wie es in Fig. 5 gestrichelt eingetragen ist, auch im Anschluß an den Spritzkopf 15 in den Halteteil 2 eingebracht werden.

In Fig. 5 ist eine weitere Alternative strichpunktiert eingezeichnet. Es handelt sich dabei darum, daß das Dichtungsprofil im Anschluß an die Kühleinrichtung 20 zunächst in einer Biegestation 23 weiterverarbeitet wird, bevor es in der Ablängstation 21 in die Abschnitte 22 abgelängt wird. In der Biegestation 23 werden Schenkel 6, 7 des Halteteils 2, in die eine metallische Armierung eingebettet ist, in ihre endgültige Montageform gebogen.

Beispiele für die Zusammensetzung der Elastomermischung 18 ergeben sich aus den Ansprüchen 5 bis 11.

Die in den Beispielen im Detail beschriebenen Elastomermischungen sind Dichtungsmassen für Dichtungsstränge, die durch Vulkanisation in einen dauerhaft elastischen, dauerhaft klebrigen und offenzellig geschäumten Zustand überführbar sind. Den im Detail beschriebenen Dichtungsmassen ist gemeinsam, daß sie als Basismaterial einen Verschnitt aus Naturkautschuk (NR) und synthetischem Kautschuk aufweisen. Dadurch ist es möglich, die Dichtungsmasse so zu vulkanisieren, daß nur der Naturkautschuk vernetzt wird, der synthetische Kautschuk dagegen überwiegend unvernetzt bleibt. Da die Dichtungsmasse ein Gemisch ist, hat sie im Hinblick auf die Formbeständigkeit die Eigenschaften eines vernetzten, vulkanisierten Kautschuks und im Hinblick auf die Klebrigkeit die eines unvulkanisierten Kautschuks. Durch die gezielte Zugabe von Vernetzungshilfsmitteln lassen sich wie durch Beispiele angegeben, optimale Eigenschaften einstellen.

## Patentansprüche

1. Dichtungsprofil (1),
mit einem, einen im wesentlichen U-förmigen Querschnitt aufweisenden, auf einen um eine abzudichtende Öffnung eines Kraftfahrzeugs umlaufenden Flansch (12) aufsteckbaren Halteteil (2),
und mit wenigstens einem an dem Halteteil (2) dicht befestigten, gegenüber einem relativ zu der Öffnung bewegbaren Verschließelement des Kraftfahrzeugs abdichtenden Dichtungsteil (3;4),
wobei der Halteteil (2) an Enden eines Stegs (5) angeformte Schenkel (6,7) aufweist,
und wobei auf eine sich zwischen den Schenkeln (6,7) erstreckende innere Fläche (13) des Stegs (5) ein mit dem Flansch (12) in Berührung bringbarer, durchgehender Dichtungsstrang (14) aus einer klebend haftenden Dichtungsmasse aufgebracht ist,
dadurch gekennzeichnet, daß die Dichtungsmasse aus einer Elastomermischung (18) besteht und durch Vulkanisation in einen dauerhaft elastischen, dauerhaft klebrigen und offenzellig geschäumten Dichtungsstrang (14) überführt und durch das eigene Klebevermögen mit dem Steg (5) verbunden ist.

2. Dichtungsprofil nach Anspruch 1,
dadurch gekennzeichnet, daß von dem fertigen Dichtungsprofil (1) Abschnitte (22) abtrennbar sind,
und daß Trennflächen jedes Abschnitts (22) einschließlich Trennflächen des Dichtungsstrangs (14) dauerhaft und dicht miteinander verbindbar sind.

3. Dichtungsprofil nach Anspruch 2, dadurch gekennzeichnet, daß die Verbindung mit einem Vulkanisationskleber erfolgt.

4. Dichtungsprofil nach einem der Ansprüche 1 bis 3, dadurch gekennzeichnet, daß das Halteteil (2) auf den Flansch (12) bis in eine Endposition aufsteckbar ist, in der zumindest ein Teil des Querschnitts des Dichtungsstrangs (14) durch den Flansch (12) komprimiert und seine Zellen zugequetscht sind,
und daß in der Endposition der Dichtungsstrang (14) durch das eigene Klebvermögen mit dem Flansch (12) dicht verbunden ist.

5. Dichtungsprofil nach einem der Ansprüche 1 bis 4, dadurch gekennzeichnet, daß die Dichtungsmasse folgende Bestandteile in phr (parts per hundred rubber) aufweist:
| | |
|---|---|
| Naturkautschuk (NR) | 40 |
| Isobuten-Isopren-Kautschuk (IIR) | 30 |
| Chlor-Isobuten-Isopren-Kautschuk (CIIR) | 20 |
| Ethylen-Propylen-Dien-Terpolymer (EPDM) | 10 |
| Calciumcarbonat | 30 |
| Kieselkreide | 70 |
| Zinkoxid | 5 |
| Vernetzungsmittel, einschl. Schwefel | 5 |
| Mineralöl | 70 |
| Azodicarbonamid | 4 |
| Sulfohydrazid | 6 |

6. Dichtungsprofil nach einem der Ansprüche 1 bis 4, dadurch gekennzeichnet, daß die Dichtungsmasse folgende Bestandteile in phr (parts per hundred rubber) aufweist:
| | |
|---|---|
| Naturkautschuk (NR) | 50 |
| Isobuten-Isopren-Kautschuk (IIR) | 40 |
| Ethylen-Propylen-Dien-Terpolymer (EPDM) | 10 |
| Calciumcarbonat | 25 |
| Kieselkreide | 60 |
| Ruß | 10 |
| Zinkoxid | 5 |
| Vernetzungsmittel, einschl. Schwefel | 5 |
| Mineralöl | 75 |
| Azodicarbonamid | 5 |
| Sulfohydrazid | 7,5 |

7. Dichtungsprofil nach einem der Ansprüche 1 bis 4, dadurch gekennzeichnet, daß die Dichtungsmasse folgende Bestandteile in phr (parts per hundred rubber) aufweist:
| | |
|---|---|
| Naturkautschuk (NR) | 45 |
| Isobuten-Isopren-Kautschuk (IIR) | 45 |
| Ethylen-Propylen-Dien-Terpolymer (EPDM) | 10 |
| Calciumcarbonat | 30 |
| Kieselkreide | 70 |
| Zinkoxid | 5 |
| Vernetzungsmittel, einschl. Schwefel | 4 |
| Mineralöl | 70 |
| Azodicarbonamid | 5 |
| Sulfohydrazid | 2,5 |

8. Dichtungsprofil nach einem der Ansprüche 1 bis 4, dadurch gekennzeichnet, daß die Dichtungsmasse folgende Bestandteile in phr (parts per hundred rubber) aufweist:
| | |
|---|---|
| Naturkautschuk (NR) | 40 |
| Isobuten-Isopren-Kautschuk (IIR) | 30 |
| Brom-Isobuten-Isopren-Kautschuk (BIIR) | 20 |
| Ethylen-Propylen-Dien-Terpolymer (EPDM) | 10 |
| Calciumcarbonat | 45 |
| Kieselkreide | 60 |
| Zinkoxid | 5 |
| Vernetzungsmittel, einschl. Schwefel | 5 |
| Mineralöl | 90 |
| Azodicarbonamid | 4 |
| Sulfohydrazid | 4 |

9. Dichtungsprofil nach einem der Ansprüche 5 bis 8, dadurch gekennzeichnet, daß der Bestandteil Naturkautschuk (NR) jeweils ersetzt ist durch einen Verschnitt von Naturkautschuk (NR) und Styrol-Butadien-Kautschuk (SBR).

10. Dichtungsprofil nach einem der Ansprüche 5 bis 8, dadurch gekennzeichnet, daß der Bestandteil, Naturkautschuk (NR) jeweils ersetzt ist durch einen Verschnitt von Naturkautschuk (NR) Polybutadien (BR).

11. Dichtungsprofil nach einem der Ansprüche 5 bis 8, dadurch gekennzeichnet, daß der Bestandteil Naturkautschuk (NR) jeweils ersetzt ist durch einen Verschnitt von Naturkautschuk (NR), Styrol-Butadien-Kautschuk (SBR) und Polybutadien (BR).

12. Dichtungsprofil nach einem der Ansprüche 1 bis 11, dadurch gekennzeichnet, daß die Dichtungsmasse für den Dichtungsstrang (14) als Basismaterial einen Verschnitt aus Naturkautschuk (NR) und synthetischem Kautschuk aufweist.

13. Dichtungsprofil nach einem der Ansprüche 1 bis 12, dadurch gekennzeichnet, daß die Dichtungsmasse für den Dichtungsstrang (14) als Vernetzungshilfsmittel Zinkoxid aufweist.

14. Dichtungsprofil nach einem der Ansprüche 1 bis 13, dadurch gekennzeichnet, daß die Dichtungsmasse für den Dichtungsstrang (14) nur eine solche Menge Vernetzungshilfsmittel enthält, daß in der Dichtungsmasse nur der Naturkautschuk vulkanisiert wird und der synthetische Kautschuk in der Dichtungsmasse mindestens teilweise, vorzugsweise vollständig unvulkanisiert bleibt.

15. Dichtungsprofil nach einem der Ansprüche 1 bis 14, dadurch gekennzeichnet, daß die Dichtungsmasse für den Dichtungsstrang (14) zum Aufschäumen als Treibmittel Azodicarbonamid und/oder Sulfohydrazid aufweist.

## Claims

1. Sealing profile (1) comprising:
a retaining part (2) having a substantially U-shaped cross-section and arranged to be fitted onto a flange (12) extending around an opening of a motor vehicle which is to be sealed,
and at least one sealing part (3; 4) which is fixed sealingly to the retaining part (2) and which is arranged to provide a seal against a closure element of the motor vehicle which is movable relative to the opening,
wherein the retaining part (2) has limbs (6, 7 ) formed at the ends of a bridge (5),
and wherein on an inner surface (13) of the bridge (5) extending between the limbs (6, 7) there is provided a continuous sealing strand (14) of an adhesive sealing compound which can be brought into contact with the flange (12),
characterised in that the sealing compound consists of an elastomeric mixture (18) converted by vulcanisation into a permanently elastic, permanently sticky and foamed open-cell sealing strand (14) which is connected by its own adhesiveness to the bridge (5).

2. Sealing profile according to claim 1,
characterised in that sections (22) can be cut from the finished sealing profile (1),
and parting surfaces of each section (22), including parting surfaces of the sealing strand (14) , are permanently and sealingly connectable to each other.

3. Sealing profile according to claim 2, characterised in that the connection is effected by a vulcanisation adhesive.

4. Sealing profile according to one of claims 1 to 3, characterised in that the retaining part (2) can be pushed onto the flange (12) to an end position in which at least a part of the cross-section of the sealing strand (14) is compressed by the flange (12) and has its cells squashed, and in that in the end position the sealing strand (14) is sealingly connected to the flange (12) by its own adhesive power.

5. Sealing profile according to one of claims 1 to 4, characterised in that the sealing compound comprises the following constituents in parts per hundred rubber:
| | |
|---|---|
| Natural rubber (NR) | 40 |
| Isobutene-isoprene rubber (IIR) | 30 |
| Chloro-isobutene-isoprene rubber (CIIR) | 20 |
| Ethylene-propylene-diene-terpolymer (EPDM) | 10 |
| Calcium carbonate | 30 |
| Siliceous chalk | 70 |
| Zinc oxide | 5 |
| Cross-linking means including sulphur | 5 |
| Mineral oil | 70 |
| Azodicarbonamide | 4 |
| Sulphohydrazide | 6 |

6. Sealing profile according to one of claims 1 to 4, characterised in that the sealing compound comprises the following constituents in parts per hundred rubber:
| | |
|---|---|
| Natural rubber (NR) | 50 |
| Isobutene-isoprene rubber (IIR) | 40 |
| Ethylene-propylene-diene-terpolymer (EPDM) | 10 |
| Calcium carbonate | 25 |
| Siliceous chalk | 60 |
| Carbon black | 10 |
| Zinc oxide | 5 |
| Cross-linking means, including sulphur | 5 |
| Mineral oil | 75 |
| Azodicarbonamide | 5 |
| Sulphohydrazide | 7.5 |

7. Sealing profile according to one of claims 1 to 4, characterised in that the sealing compound comprises the following constituents in parts per hundred rubber:
| | |
|---|---|
| Natural rubber (NR) | 45 |
| Isobutene-isoprene rubber (IIR) | 45 |
| Ethylene-propylene-diene-terpolymer(EPDM) | 10 |
| Calcium carbonate | 30 |
| Siliceous chalk | 70 |
| Zinc oxide | 5 |
| Cross-linking means, including sulphur | 4 |
| Mineral oil | 70 |
| Azodicarbonamide | 5 |
| Sulphohydrazide | 2.5 |

8. Sealing profile according to one of claims 1 to 4, characterised in that the sealing compound comprises the following constituents in parts per hundred rubber:
| | |
|---|---|
| Natural rubber (NR) | 40 |
| Isobutene-isoprene rubber (IIR) | 30 |
| Bromo-isobutene-isoprene rubber (BIIR) | 20 |
| Ethylene-propylene-diene-terpolymer(EPDM) | 10 |
| Calcium carbonate | 45 |
| Siliceous chalk | 60 |
| Zinc oxide | 5 |
| Cross-linking means, including sulphur | 5 |
| Mineral oil | 90 |
| Azodicarbonamide | 4 |
| Sulphohydrazide | 6 |

9. Sealing profile according to one of claims 5 to 8, characterised in that the constituent natural rubber (NR) is respectively substituted by a blend of natural rubber (NR) and styrene-butadiene rubber (SBR).

10. Sealing profile according to one of claims 5 to 8, characterised in that the constituent natural rubber (NR) is respectively substituted by a blend of natural rubber (NR) and polybutadiene (BR).

11. Sealing profile according to one of claims 5 to 8, characterised in that the constituent natural rubber (NR) is respectively substituted by a blend of natural rubber (NR), styrene-butadiene rubber (SBR) and polybutadiene (BR).

12. Sealing profile according to one of claims 1 to 11, characterised in that the sealing compound for the sealing strand (14) comprises as base material a blend of natural rubber (NR) and synthetic rubber.

13. Sealing profile according to one of claims 1 to 12, characterised in that the sealing compound for the sealing strand (14) comprises zinc oxide as cross-linking supporting means.

14. Sealing profile according to one of claims 1 to 13, characterised in that the sealing compound for the sealing strand (14) contains only such an amount of cross-linking supporting means that in the sealing compound only the natural rubber is vulcanised and the synthetic rubber in the sealing compound remains at least partially, and preferably fully, unvulcanised.

15. Sealing profile according to one of claims 1 to 14, characterised in that the sealing compound for the sealing strand (14) comprises azodicarbonamide and/or sulphohydrazide as a blowing agent for the foaming.

## Revendications

1. Profilé d'étanchéité (1)
comportant une partie de fixation (2) présentant essentiellement une section en forme de U et pouvant être emboîtée sur une bride (12) faisant le tour d'une ouverture à rendre étanche d'un véhicule automobile,
et comportant au moins une partie d'étanchéité (3; 4) fixée de façon étanche à la partie de fixation (2) et assurant l'étanchéité par rapport à un organe de fermeture du véhicule automobile, mobile par rapport à l'ouverture du véhicule,
la partie de fixation (2) présentant des branches (6, 7) formées aux extrémités d'une âme (5) du U,
et un cordon d'étanchéité (14) continu, constitué d'une masse d'étanchéité auto-adhésive et qui peut venir en contact avec la bride (12), étant appliquée sur une surface intérieure (13) de l'âme (5) s'étendant entre les branches (6, 7),
caractérisé en ce que la masse d'étanchéité est constituée par un mélange d'élastomères (18) et se transforme, par vulcanisation, en un cordon d'étanchéité (14) durablement élastique, durablement adhésif, constitué d'une mousse à cellules ouvertes, et en ce que cette masse d'étanchéité est liée à l'âme (5) grâce à son propre pouvoir collant.

2. Profilé d'étanchéité suivant la revendication 1, caractérisé en ce que des sections (22) peuvent être séparées du profilé d'étanchéité (1) terminé,
et en ce que les surfaces de séparation de chaque section (22), y compris des surfaces de séparation du cordon d'étanchéité (14), peuvent être reliées durablement et de façon étanche les unes avec les autres.

3. Profilé d'étanchéité suivant la revendication 2, caractérisé en ce que la liaison est réalisée par une colle vulcanisable.

4. Profilé d'étanchéité suivant l'une des revendications 1 à 3, caractérisé en ce que la partie de fixation (2) peut être emboîtée sur la bride (12) jusque dans une position finale, dans laquelle au moins une partie de la section du cordon d'étanchéité (14) est comprimée par la bride (12) et dans laquelle ses cellules sont refermées par pincement,
et en ce que, dans la position finale, le cordon d'étanchéité (14) est relié de façon étanche à la bride (12) par son propre pouvoir collant.

5. Profilé d'étanchéité suivant l'une des revendications 1 à 4, caractérisé en ce que la masse d'étanchéité présente les constituants suivants en pcpc (parties pour cent parties de caoutchouc):
| | |
|---|---|
| Caoutchouc naturel (NR) | 40 |
| Caoutchouc Isobutène-Isoprène (IIR) | 30 |
| Caoutchouc Chlore-Isobutène-Isoprène (CIIR) | 20 |
| Terpolymère Ethylène-Propylène-Diène (EPDM) | 10 |
| Carbonate de calcium | 30 |
| Craie siliceuse | 70 |
| Oxyde de zinc | 5 |
| Agent réticulant, y compris soufre | 5 |
| Huile minérale | 70 |
| Azodicarbonamide | 4 |
| Thiohydrazide | 6. |

6. Profilé d'étanchéité suivant l'une des revendications 1 à 4, caractérisé en ce que la masse d'étanchéité présente les constituants suivants en pcpc (parties pour cent parties de caoutchouc):
| | |
|---|---|
| Caoutchouc naturel (NR) | 50 |
| Caoutchouc Isobutène-Isoprène (IIR) | 40 |
| Terpolymère Ethylène-Propylène-Diène (EPDM) | 10 |
| Carbonate de calcium | 25 |
| Craie siliceuse | 60 |
| Noir de fumée | 10 |
| Oxyde de zinc | 5 |
| Agent réticulant, y compris soufre | 5 |
| Huile minérale | 75 |
| Azodicarbonamide | 5 |
| Thiohydrazide | 7,5 |

7. Profilé d'étanchéité suivant l'une des revendications 1 à 4, caractérisé en ce que la masse d'étanchéité présente les constituants suivants en pcpc (parties pour cent parties de caoutchouc):
| | |
|---|---|
| Caoutchouc naturel (NR) | 45 |
| Caoutchouc Isobutène-Isoprène (IIR) | 45 |
| Terpolymère Ethylène-Propylène-Diène (EPDM) | 10 |
| Carbonate de calcium | 30 |
| Craie siliceuse | 70 |
| Oxyde de zinc | 5 |
| Agent réticulant, y compris soufre | 4 |
| Huile minérale | 70 |
| Azodicarbonamide | 5 |
| Thiohydrazide | 2,5 |

8. Profilé d'étanchéité suivant l'une des revendications 1 à 4, caractérisé en ce que la masse d'étanchéité présente les constituants suivants en pcpc (parties pour cent parties de caoutchouc):
| | |
|---|---|
| Caoutchouc naturel (NR) | 40 |
| Caoutchouc Isobutène-Isoprène (IIR) | 30 |
| Caoutchouc Brome-Isobutène-Isoprène (BIIR) | 20 |
| Terpolymère Ethylène-Propylène-Diène (EPDM) | 10 |
| Carbonate de calcium | 45 |
| Craie siliceuse | 60 |
| Oxyde de zinc | 5 |
| Agent réticulant, y compris Soufre | 5 |
| Huile minérale | 90 |
| Azodicarbonamide | 4 |
| Thiohydrazide | 4 |

9. Profilé d'étanchéité suivant l'une des revendications 5 à 8, caractérisé en ce que le constituant caoutchouc naturel (NR) est chaque fois remplacé par un mélange de caoutchouc naturel (NR) et de caoutchouc styrène-butadiène (SBR).

10. Profilé d'étanchéité suivant l'une des revendications 5 à 8, caractérisé en ce que le constituant caoutchouc naturel (NR) est chaque fois remplacé par un mélange de caoutchouc naturel (NR) et de polybutadiène (BR).

11. Profilé d'étanchéité suivant l'une des revendications 5 à 8, caractérisé en ce que le constituant caoutchouc naturel (NR) est chaque fois remplacé par un mélange de caoutchouc naturel (NR), de caoutchouc styrène-butadiène (SBR) et de polybutadiène (BR).

12. Profilé d'étanchéité suivant l'une des revendications 1 à 11, caractérisé en ce que la masse d'étanchéité pour le cordon d'étanchéité (14) comprend, comme constituant de base, un mélange de caoutchouc naturel (NR) et de caoutchouc synthétique.

13. Profilé d'étanchéité suivant l'une des revendications 1 à 12, caractérisé en ce que la masse d'étanchéité pour le cordon d'étanchéité (14) comprend de l'oxyde de zinc comme agent auxiliaire de réticulation.

14. Profilé d'étanchéité suivant l'une des revendications 1 à 13, caractérisé en ce que la masse d'étanchéité pour le cordon d'étanchéité (14) contient seulement une quantité d'agent auxiliaire de réticulation telle que, dans la masse d'étanchéité, seul le caoutchouc naturel est vulcanisé, le caoutchouc synthétique restant, au moins en partie, non vulcanisé, et de préférence complètement non vulcanisé.

15. Profilé d'étanchéité suivant l'une des revendications 1 à 14, caractérisé en ce que la masse d'étanchéité pour le cordon d'étanchéité (14) comprend, comme produit moussant pour le développement de la mousse, de l'azodicarbonamide et/ou du thiohydrazide.
